# EUROPÄISCHE PATENTSCHRIFT

(11) **EP 1 073 578 B1**
(45) Veröffentlichungstag und Bekanntmachung des Hinweises auf die Patenterteilung: **28.05.2003**
(21) Anmeldenummer: 99914566.7
(22) Anmeldetag: 01.04.1999
(51) Int. Cl.: B62D 7/14

(54) **LENKVORRICHTUNG**
STEERING DEVICE
DISPOSITIF DE DIRECTION

(30) Priorität: 30.04.1998 DE 19819404
(43) Veröffentlichungstag der Anmeldung: 07.02.2001
(73) Patentinhaber: DaimlerChrysler AG, 70567 Stuttgart (DE)
(72) Erfinder: HORWATH, Jochen, D-72669 Unterensingen (DE); KAUFMANN, Ralf, D-74731 Walldürn (DE); PFLUG, Hans-Christian, D-73630 Remshalden (DE)
(86) Internationale Anmeldenummer: EP9902285
(87) Internationale Veröffentlichungsnummer: WO99057001

(56) Entgegenhaltungen:
- EP-A- 0 577 571
- WO-A-97/26170
- US-A- 4 591 177
- US-A- 5 584 226

## Beschreibung

Die Erfindung betrifft eine Lenkvorrichtung zur Lenkung der Räder einer als Nach- oder Vorlaufachse ausgebildeten Lenkachse eines wenigstens drei Achsen aufweisenden Kraftfahrzeuges mit den Merkmalen des Obergriffes des Anspruches 1.

Um bei einem Kraftfahrzeug, insbesondere bei einem Nutzfahrzeug bzw. Lastkraftwagen, mit mehr als zwei Achsen das Fahrverhalten, z.B. hinsichtlich Wendigkeit und Reifenverschleiß, zu verbessern, wird wenigstens eine als Nach- oder Vorlaufachse ausgebildete Starrachse mit unlenkbaren Rädern durch eine Lenkachse mit lenkbaren Rädern ersetzt. Zur Lenkung der Räder dieser Nach- oder Vorlaufachse wird das Fahrzeug mit einer als Zusatzlenkung bezeichneten Lenkvorrichtung der eingangs genannten Art ausgestattet. Dabei bewirken die Hydraulik und die Elektronik der Lenkvorrichtung eine Lenkung dieser Räder in Abhängigkeit der fahrerseitig ausgelösten Lenkbewegungen unter Berücksichtigung der geometrischen Anordnung dieser Räder am Fahrzeug.

Für den Fall, daß eine solche Zusatzlenkung Fehlfunktionen aufweist, können fortschrittliche Zusatzlenkungen dieser Art von einen Normalbetrieb mit voll funktionsfähiger Lenkvorrichtung auf einen Notbetrieb umschalten, um insbesondere die Sicherheit des Fahrzeuges gewährleisten zu können. Dabei haben sich in der Praxis zwei verschiedene Sicherheitskonzepte herausgebildet. Entsprechend der einen Sicherheitskonzeption werden die durch die Zusatzlenkung lenkbaren Räder in ihrer momentanen Stellung verriegelt, in der sie sich im Zeitpunkt der Umschaltung auf den Notbetrieb befinden. Alternativ können die Räder durch entsprechende Zusatzelemente in eine zentrierte, der Geradeausfahrt des Kraftfahrzeuges zugeordnete Mittelstellung zurückgefahren und erst dann in dieser verriegelt werden. Im letztgenannten Fall funktionieren die an sich lenkbaren Räder der Lenkachse im Notbetrieb wie unlenkbare Räder einer Starrachse.

Entsprechend der anderen Sicherheitskonzeption werden die von der Lenkvorrichtung gelenkten Räder der Lenkachse im Notbetrieb hydraulisch freigeschaltet, wobei die Lagerung der Räder bzw. der Aufbau der Lenkachse so konstruiert ist, daß diese Räder unter Ausnutzung eines Nachlaufeffektes zumindest bei Vorwärtsfahrt des Fahrzeuges selbstspurend funktionieren. Dabei wird die Tragfähigkeit der Räder nicht beeinträchtigt, jedoch können durch diese seitliche Führungskräfte nicht mehr auf das Kraftfahrzeug übertragen werden. Die vorliegende Erfindung betrifft eine Lenkvorrichtung für derartige, im Notbetrieb selbstspurende Räder.

Zur Realisierung der hydraulischen Freischaltung der gelenkten Räder im Notbetrieb weist die Hydraulikanordnung ein von der Elektronikanordnung betätigbares Freischaltventil auf, mit dem im Notbetrieb die Hydraulikanschlüsse des Stellaggregates kurzgeschlossen werden, wodurch an beiden Hydraulikanschlüssen der gleiche Hydraulikdruck anliegt und zwischen diesen ein freier Fluidaustausch möglich ist.

Die vorliegende Erfindung beschäftigt sich mit dem Problem, eine Lenkvorrichtung der eingangs genannten Art dahingehend zu verbessern, daß sich die Fahrzeugsicherheit erhöht.

Dieses Problem wird erfindungsgemäß durch eine Lenkvorrichtung mit den Merkmalen des Anspruches 1 gelöst.

Die erfindungsgemäß vorgeschlagene Anordnung von Drosselelementen bewirkt, daß im Notbetrieb, d.h. wenn die Hydraulikanschlüsse des Stellaggregates über das Freischaltventil hydraulisch miteinander kommunizieren, ein Hydraulikmittelaustausch zwischen diesen Hydraulikanschlüssen nur gedrosselt erfolgen kann. Wenn beispielsweise das Fahrzeug einseitig ein Hindernis oder eine Bodenunebenheit überfährt, können bei einer herkömmlichen Lenkvorrichtung die dabei auftretenden auf die freigeschalteten, d.h. seitlich frei beweglichen Räder einwirkenden Seitenkräfte eine kurzfristige Auslenkung der betreffenden Räder bewirken, was zu einem unruhigen Nachlauf, insbesondere zu einem Flattern der jeweiligen freigeschalteten Räder führen kann. Im Unterschied dazu wird bei der erfindungsgemäßen Lenkvorrichtung eine von äußeren Kräften erzeugte Lenkbewegung der freigeschalteten Räder gedämpft, da der Fluidaustausch zwischen den Hydraulikanschlüssen des Stellaggregates gedrosselt erfolgt. Durch diese Maßnahme weisen die freigeschalteten Räder erheblich verbesserte Nachlaufeigenschaften auf und tragen dadurch zu einer erhöhten Fahrzeugsicherheit im Notbetrieb bei.

Außerdem bewirken die erfindungsgemäß vorgeschlagenen Maßnahmen eine Verbesserung der Fahrzeugsicherheit im Normalbetrieb. Denn bei bekannten Lenkvorrichtungen ist das Regel/Steuerventil üblicherweise als Proportionalventil ausgebildet, das je nach Aus- bzw. Ansteuerung den Betriebsdruck eines an einen der Anschlüsse des Proportionalventils angeschlossenen Druckerzeugers mehr oder weniger gedrosselt an den einen oder anderen Anschluß des hydraulischen Stellaggregates weiterleitet. Damit bei maximal beladenem Fahrzeug ausreichend hohe Stellkraft und Stellgeschwindigkeit für das Stellaggregat gewährleistet werden können, ist das Proportionalventil mit für diese Fälle ausreichend großen Durchlaßquerschnitten bzw. ausreichend kleinen Drosselwiderständen ausgestattet. Für die überwiegende Mehrzahl von Betriebsfällen müssen durch das hydraulische Stellaggregat jedoch nur deutlich kleinere Stellkräfte und/oder kleinere Stellgeschwindigkeiten realisiert werden, so daß das Proportionalventil in diesen Fällen nur in einem kleinen Bereich mit kleinen Öffnungsquerschnitten bzw. mit großen Drosselwiderständen aus- bzw. angesteuert werden muß. Diese reduzierte Aussteuerung bedeutet jedoch gleichzeitig eine erheblich eingeschränkte Auflösung, d.h. die durch das Proportionalventil bewirkte Einstellung von Stellgeschwindigkeit und Stellweg und somit von Lenkgeschwindigkeit und Lenkwinkel der jeweiligen Räder kann nur relativ grob eingestellt und geregelt werden. Untersuchungen haben gezeigt, daß die für eine maximale Fahrzeugbeladung und maximale Lenkgeschwindigkeiten ausgelegten Proportionalventile in der Praxis in der überwiegenden Mehrheit der auftretenden Betriebsfälle nur bis etwa 20 % ausgesteuert werden.

Mit Hilfe der erfindungsgemäß angeordneten Drosseln ist es jedoch möglich, zur Realisierung der gewünschten Stellgliedbewegungen das Proportionalventil weiter zu öffnen bzw. in einem erheblich größeren Bereich auszusteuern, da zur Realisierung derselben Stellgeschwindigkeiten das Proportionalventil wegen den in den Hydraulikleitungen angeordneten Drosselwiderständen stärker geöffnet bzw. ausgesteuert werden muß. Somit kann die gewünschte Stellgliedbewegung hinsichtlich Geschwindigkeit und Weg mit besserer Auflösung und folglich genauer gesteuert werden.

Bei einer bevorzugten Ausführungsform kann die Hydraulikanordnung als closed-center-Anordnung ausgestaltet sein, bei der das Regel/Steuerventil einen mit einer Druckquelle verbundenen Anschluß des Regel/Steuerventils sperrt, solange keine Regelabweichung zwischen Soll- und Istlenkwinkel festgestellt wird. Diese Maßnahme bewirkt, daß die lenkbaren Räder bei Geradeausfahrt im Normalbetrieb hydraulisch gesperrt sind und besonders gute Geradeauslaufeigenschaften aufweisen.

Vorzugsweise weist eine derartige Ausführungsform mit closed-center-Anordnung einen Druckspeicher auf, der bedarfsabhängig von der Hydraulikpumpe gespeist wird. Eine derartige Anordnung hat sich in der Praxis besonders gut bewährt, da beispielsweise eine erheblich kleinere Hydraulikpumpe verwendet werden kann.

Die Vorteile einer closed-center-Anordnung mit Druckspeicher können sich jedoch bei herkömmlichen Lenkvorrichtungen im Notfall nachteilig für die Zusatzlenkung auswirken. Beispielsweise kann das Regel/Steuerventil durch eine Fehlfunktion ausgerechnet in einer solchen Stellung blockiert werden, in der der Druckspeicher mit einem der Hydraulikanschlüsse des Stellaggregates verbunden ist. Auch wenn die Elektronik der Lenkvorrichtung sofort die Hydraulikpumpe ausschaltet, liegen zumindest kurzfristig Hydraulikmittelströmungen vor, da sich der Druckspeicher durch das (teilweise) geöffnete Regel/Steuerventil entspannt. Obwohl die Hydraulikanschlüsse des Stellaggregates über das Freischaltventil kurzgeschlossen sind, kann sich während dieser Entladung des Druckspeichers aufgrund der Drosselverluste am Regel/Steuerventil und am Freischaltventil an den Anschlüssen des Freischaltventiles eine Druckdifferenz ausbilden, die sich auf die Hydraulikanschlüsse des Stellaggregates überträgt und an diesem trotz Freischaltung eine Stellkraft und somit eine Lenkkraft am jeweiligen Rad erzeugt. Auf diese Weise kann durch die Druckspeicherentladung eine kurzfristige Auslenkung beim Umschalten auf den Notbetrieb auftreten, was bei herkömmlichen Zusatzlenkungen zu problematischen Fahrsituationen führen kann.

Im Unterschied dazu wird bei der erfindungsgemäßen Lenkvorrichtung aufgrund der vorgeschlagenen Anordnung von Drossel-elementen die Entladung des Druckspeichers über diese Dros-selelemente gedrosselt. Dadurch werden die Strömungsgeschwindigkeiten reduziert und in der Folge die Drosselwirkungen bei der Durchströmung des Regel/Steuerventils und des Freischaltventils verringert. Der sich zwischen den Anschlüssen des Freischaltventils aufbauende Differenzdruck fällt dadurch erheblich niedriger aus und kann sich außerdem wiederum aufgrund der Drosselelemente nur gedrosselt an die Anschlüsse des Stellaggregates ausbreiten.

Die erfindungsgemäß vorgeschlagenen Maßnahmen können somit in vielfältiger Hinsicht die Fahrzeugsicherheit verbessern.

Weitere wichtige Merkmale und Vorteile der erfindungsgemäßen Lenkvorrichtung ergeben sich aus den Unteransprüchen, aus den Zeichnungen und aus der nachfolgenden Beschreibung eines bevorzugten Ausführungsbeispieles anhand der Zeichnungen. Es zeigen, jeweils schematisch,
- Fig. 1: eine Prinzipskizze eines dreiachsigen Kraftfahrzeuges, bei dem eine Hinterachse mit der erfindungsgemäßen Lenkvorrichtung ausgestattet ist, und
- Fig. 2: ein prinzipieller Schaltplan einer Hydraulikanordnung der erfindungsgemäßen Lenkvorrichtung.

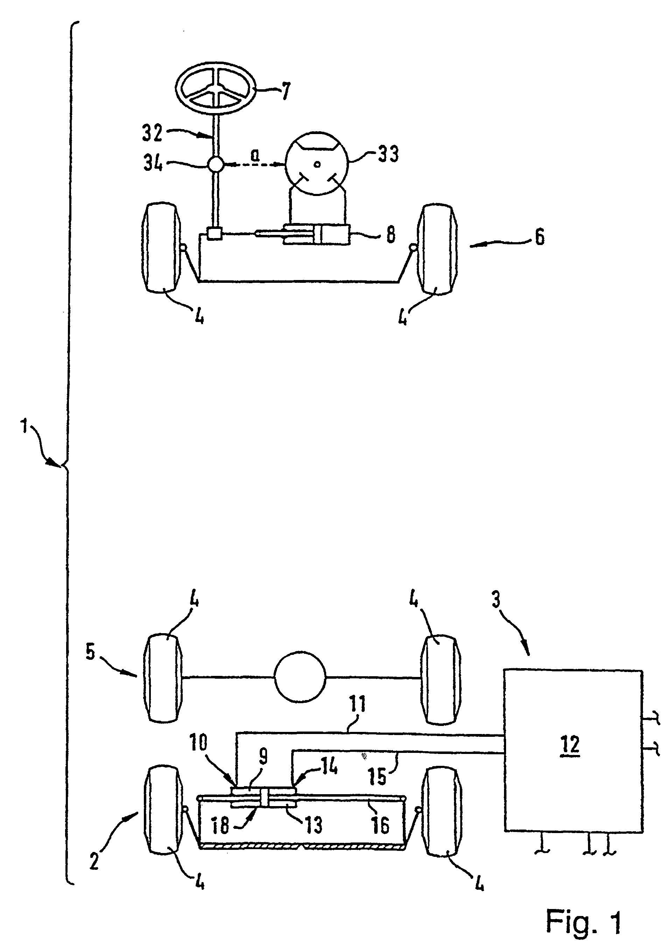

Entsprechend Fig. 1 ist ein im übrigen nicht dargestelltes, dreiachsiges Kraftfahrzeug 1 an seiner in Fahrtrichtung hintersten Achse 2, in Fig. 1 unten, die im Folgenden als Lenkachse 2 bezeichnet wird, mit einer erfindungsgemäßen Lenkvorrichtung 3 ausgestattet. Durch diese Zusatzlenkung 3 an der Lenkachse 2 des Kraftfahrzeuges 1 wird dessen Kurvenfahrverhalten erheblich verbessert. Beispielsweise wird der Schräglauf an den Rädern 4 der Lenksachse 2 und einer davor angeordneten, mit ungelenkten Rädern 4 versehenen Hinterachse 5 und somit deren Abrieb erheblich vermindert.

Außerdem wird die Wendigkeit des Fahrzeuges erheblich verbessert.

Die Lenkbewegungen der Räder 4 einer Vorderachse 6 korrelieren über eine mechanische Zwangskopplung durch einen Lenkstrang 32 direkt mit den Lenkbewegungen eines Lenkhandrades 7, wobei eine übliche hydraulische Lenkhelfeinrichtung (Servolenkung) durch ein Kolben-Zylinder-Aggregat 8 symbolisiert ist. Dabei erfolgt die Ansteuerung eines Servoventiles 33 der Servolenkung in der Regel in Abhängigkeit der im Lenkstrang 32 auftretenden, beispielsweise über ein Torsionselement 34 od.dgl. feststellbaren Kräfte bzw. Momente zwischen den Rädern 4 und dem Lenkhandrad 7. Diese Wirkverbindung zwischen Lenkstrang 32 und Servoventil 33 ist durch einen gestrichelten Doppelpfeil a symbolisiert.

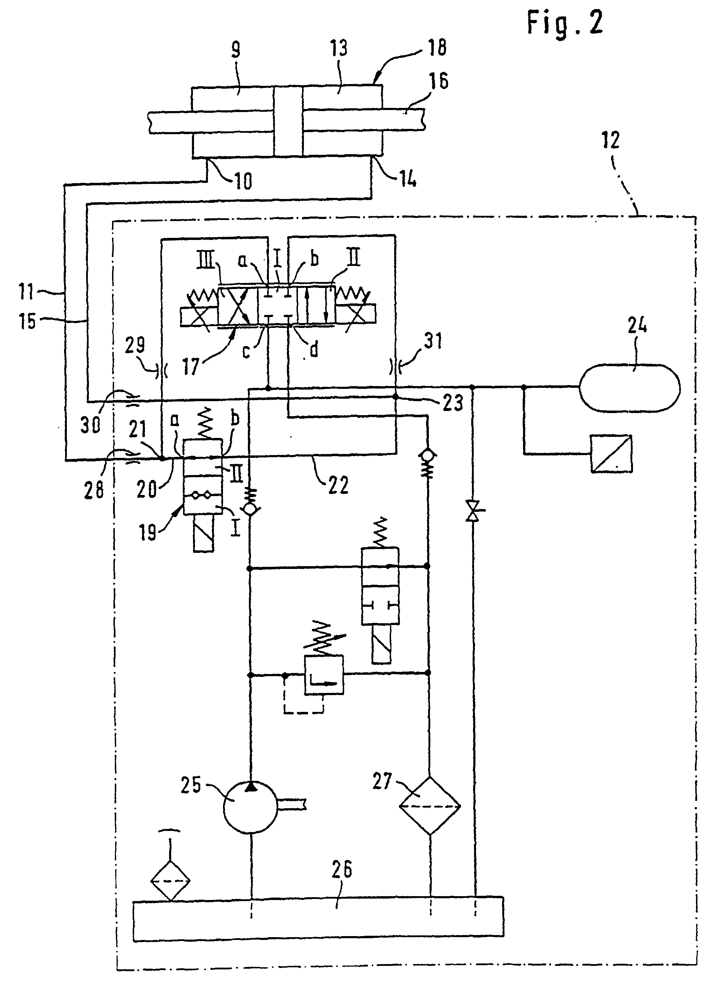

Im Unterschied dazu erfolgt die Lenkung der Räder 4 der gelenkten Hinterachse 2 über die in Fig. 2 dargestellte Hydraulikanordnung in Verbindung mit einer nicht dargestellten Elektronikanordnung. Die von der Elektro-nikanordnung bewirkten Lenkbewegungen der Räder 4 der Lenkachse 2 korrelieren indirekt mit den Lenkbewegungen des Lenkhandrades 7. Dabei steuert die Elektronikanordnung die Lenkbewegungen der Räder 4 der gelenkten Hinterachse 2 in entsprechend angepaßter Weise, insbesondere bei einer Nachlaufachse gegenläufig zu den Lenkbewegungen der Räder 4 der Vorderachse 6. Es können jedoch auch Fahrsituationen auftreten, in denen die Vorderachse 6 gelenkt und die lenkbare Hinterachse 2 in Geradeausstellung zentriert wird. Dies kann z.B. bei hohen Fahrgeschwindigkeiten oder nach Betätigung eines Zentrierschalters der Fall sein.

Zur Lenkbetätigung der Räder 4 der Lenkachse 2 ist ein hydraulisches Stellaggregat vorgesehen, das symbolisch als Kolben-Zylinder-Aggregat 18 dargestellt ist. Das Stellaggregat 18 ist doppeltwirkend und hydrostatisch ausgebildet, d.h. ein Stellglied 16 des Stellaggregates 18 ist einerseits je nach dem, wie zwei Hydraulikanschlüsse 10 und 14 des Stellaggregates 18 mit Druck beaufschlagt sind, in zwei entgegengesetzte Stellrichtungen antreibbar ("doppeltwirkend"). Andererseits ist das Stellglied 16 unbeweglich bzw. starr blockiert, wenn die Hydraulikanschlüsse 10 und 14 gesperrt sind ("hydrostatisch"). Im dargestellten Ausführungsbeispiel ist das Stellglied durch eine Kolbenstange 16 symbolisiert, die zur Lenkbetätigung an einem Lenkgestänge od.dgl. der Räder 4 der Lenkachse 2 angreift.

Eine erste Kammer 9 des Kolben-Zylinder-Aggregates 18 wirkt über den ersten Hydraulikanschluß 10 und eine erste Hydraulikleitung 11 mit einer Hydraulikanordnung 12 zusammen, die in Fig. 1 als Rechteck symbolisiert ist. Eine zweite Kammer 13 des Kolben-Zylinder-Aggegates 18 ist über dessen zweiten Hydraulikanschluß 14 und über eine zweite Hydraulikleitung 15 ebenfalls an die Hydraulikanordnung 12 angeschlossen.

Entsprechend Fig. 2 ist die erste Hydraulikleitung 11 an einen ersten Anschluß 17a eines Regel/Steuerventils 17 angeschlossen, das im Ausführungsbeispiel als Proportionalventil ausgebildet ist. Die zweite Hydraulikleitung 15 ist an einen zweiten Anschluß 17b des Proportionalventils 17 angeschlossen. Außerdem sind die Hydraulikleitungen 11 und 15 an ein Freischaltventil 19 angeschlossen. Eine erste Freischaltleitung 20 verbindet dabei einen ersten Anschluß 19a des Freischaltventils 19 an einer ersten Anschlußstelle 21 mit der ersten Hydraulikleitung 11. Außerdem verbindet eine zweite Freischaltleitung 22 an einer zweiten Anschlußstelle 23 die zweite Hydraulikleitung 15 mit einem zweiten Anschluß 19b des Freischaltventils 19.

Das Freischaltventil 19 weist zwei Stellungen I und II auf, wobei in seiner Stellung II seine Anschlüsse 19a und 19b miteinander verbunden sind, so daß über die Freischaltleitungen 20 und 22 die Hydraulikleitungen 11 und 15 kurzgeschlossen sind. In der Stellung I des Freischaltventiles 19 sind seine Anschlüsse 19a und 19b jeweils gesperrt. Die Stellung I ist dem Normalbetrieb und die Stellung II dem Notbetrieb der Lenkvorrichtung 3 zugeordnet.

Das Proportionalventil 17 weist einen dritten Anschluß 17c auf, an dem ein Druckspeicher 24 angeschlossen ist, der über eine Hydraulikmittelpumpe 25 aus einem Hydraulikmittelreservoir 26 gespeist wird. Ein vierter Anschluß 17d des Proportionalventils 17 ist über ein Filter 27 mit dem Reservoir 26 verbunden.

Das Proportionalventil 17 weist drei unterschiedliche Schaltzustände I,II und III auf. Im Schaltzustand I sind sämtliche Anschlüsse 17a bis d des Proportionalventils 17 gesperrt. Es handelt sich somit um eine sogenannte closed-center-Anordnung, bei der in Schaltzustand I des Proportionalventils 17 der mit der Druckquelle (Druckspeicher 24 und Pumpe 25) verbundene Anschluß 17c gesperrt ist, wenn keine Abweichung zwischen Soll- und Istlenkwinkel vorliegt. Außerdem sind in der gezeigten Ausführungsform die Anschlüsse 17a und 17b gesperrt, so daß die Kolbenstange 16 des Kolben-Zylinder-Aggregates 18 in ihrer Mittellage hydraulisch verriegelt ist.

In dem Schaltzustand II sind der Anschluß 17a mit dem Anschluß 17c und der Anschluß 17b mit dem Anschluß 17d verbunden, wodurch die erste Kammer 9 des Kolben-Zylinder-Aggregates 18 mit Druck beaufschlagt wird, während die zweite Kammer 13 in das Reservoir 26 entleert werden kann, wobei sich die Kolbenstange 16 entsprechend Fig. 2 nach rechts verstellen kann. Im Schaltzustand III des Proportionalventils 17 sind der Anschluß 17a mit dem Anschluß 17d und der Anschluß 17b mit dem Anschluß 17c verbunden, wodurch die zweite Kammer 13 mit Druck aus dem Druckspeicher 24 beaufschlagt ist, während sich die Kammer 9 in das Reservoir 26 entleeren kann, wobei sich die Kolbenstange 16 entsprechend Fig. 2 nach links verstellen kann.

Bei den Schaltzuständen II und III handelt es sich jeweils um Schaltbereiche, in denen die geschilderten Schaltungszustände je nach An- bzw. Aussteuerung des Proportionalventiles 17 mit mehr oder weniger stark geöffneten Durchströmquerschnitten vorliegen, d.h. die Durchströmung des Proportionalventiles 17 erfolgt mit mehr oder weniger großem Drosselwiderstand, in Abhängigkeit des gewählten Aussteuergrades innerhalb des jeweiligen Schaltzustandes II oder III.

In der ersten Hydraulikleitung 11 ist zwischen dem Kolben-Zylinder-Aggregat 18 und der ersten Anschlußstelle 21 des Freischaltventils 19 ein erstes Drosselelement 28 angeordnet. Ein zweites Drosselelement 29 ist ebenfalls in der ersten Hydraulikleitung 11 zwischen der ersten Anschlußstelle 21 des Freischaltventils 19 und dem Regel/Steuerventil 17 angeordnet. In der zweiten Hydraulikleitung 15 ist zwischen dem Kolben-Zylinder-Aggregat 18 und der zweiten Anschlußstelle 23 des Freischaltventils 19 ein drittes Drosselelement 30 angeordnet. Ein viertes Drosselelement 31 ist ebenfalls in der zweiten Hydraulikleitung 15 zwischen der zweiten Anschlußstelle 23 des Freischaltventils 19 und dem Regel/Steuerventil 17 angeordnet.

Die erfindungsgemäße Anordnung der vier Drosselelemente 28,29,30 und 31 verbessert das Betriebsverhalten der Hydraulikanordnung 12 und somit der erfindungsgemäßen Lenkvorrichtung 2 in mehrfacher Weise, wodurch die Fahrzeugsicherheit sowohl im Normalbetrieb als auch im Notbetrieb erhöht wird.

Zum einen kann im Normalbetrieb, d.h. wenn das Freischaltventil in seine Stellung I geschaltet ist, ein großer Aussteuerbereich des Proportionalventils 17 ausgenutzt werden, wodurch die Auflösung oder Feinheit, mit der gewünschte Verstellwege und Verstellgeschwindigkeiten für die Kolbenstange 16 des Kolben-Zylinder-Aggregates 18 realisiert werden können, erhöht ist. Dies ist darauf zurückzuführen, daß zur Erzielung der jeweils notwendigen Strömungsgeschwindigkeit in den Hydraulikleitungen 11 und 15 aufgrund der darin angeordneten Drosseln 28,29 bzw. 30,31 und des damit verbundenen erhöhten Strömungswiderstandes das Proportionalventil 17 in Richtung größerer Öffnungsquerschnitte und somit in einem größeren Steuerbereich ausgesteuert werden muß.

Zum anderen bewirken die erfindungsgemäß angeordneten Drosselelemente 28,29,30 und 31, daß im Notbetrieb, d.h. wenn das Freischaltventil 19 in seine Stellung II geschaltet ist, ein Hydraulikmittelaustausch zwischen den Kammern 9 und 13 des Kolben-Zylinder-Aggregates 18 nur gedrosselt erfolgen kann. Dies bewirkt eine Dämpfung von außen auf die mit der Kolbenstange 16 zusammenwirkenden Räder 4 aufgebrachten Seitenkräften, wodurch sich die Notlaufeigenschaft der jeweiligen Räder 4 erheblich verbessert.

Wenn ein Notfall eintritt, bei dem das Proportionalventil 17 in einem seiner Zustände II oder III blockiert wird, kann sich der Druckspeicher 24 über die durch die Stellung II des Freischaltventiles 19 kurzgeschlossenen Hydraulikleitungen 11 und 15 in das Reservoir 26 entladen. Bei der sich dabei ausbildenden Durchströmung des Freischaltventils und des Proportionalventils kommt es wegen herrschender Strömungsverluste bzw. Strömungswiderstände an diesen Ventilen zu Druckabfällen in der Hydraulikströmung. Diese Druckabfälle können bei einer herkömmlichen Lenkvorrichtung ohne die erfindungsgemäß vorgeschlagenen Drosselelemente 28,29,30 und 31 zu starken Druckunterschieden zwischen den Anschlüssen 19a und 19b des Freischaltventils 19 führen, die sich an die Hydraulikanschlüsse 10 und 14 des Kolben-Zylinder-Aggregates 18 fortpflanzen. Dadurch kann die Kolbenstange 16 des Kolben-Zylinder-Aggregates 18 eine Lenkkraft auf die betroffenen Räder 4 ausüben. Eine derartige, ungewollte Lenkung kann somit bei herkömmlichen Lenkvorrichtungen zu kritischen Fahrsituationen führen. Aufgrund der erfindungsgemäß vorgeschlagenen Anordnung der Drosselelemente 28,29,30 und 31 erfolgt die Entladung des Druckspeichers 24 gegen größere Drosselwiderstände, so daß die Entladung des Druckspeichers 24 durch das Proportionalventil 17 und durch der Freischaltventil 19 langsamer, mit kleineren Strömungsgeschwindigkeiten stattfindet, wodurch die sich zwischen den Hydraulikanschlüssen 10 und 14 des Kolben-Zylinder-Aggregates 18 aufbauende Druckdifferenz deutlich niedriger ausfällt. Die sich dann noch ausbildende Lenkkraft ist dabei regelmäßig zu gering, um gefährliche Fahrsituationen auszulösen, und ist im günstigsten Fall sogar zu gering, um eine Lenkbewegung an den entsprechenden Rädern 4 zu bewirken.

## Patentansprüche

1. Lenkvorrichtung zur Lenkung von Rädern (4) einer als Nach- oder Vorlaufachse ausgebildeten Lenkachse (2) eines wenigstens drei Achsen aufweisenden Kraftfahrzeuges (1) mit folgenden Merkmalen:
(A) die Lenkvorrichtung (3) weist eine Hydraulikanordnung (12) zur Lenkbetätigung der Räder (4) der Lenkachse (2) sowie eine Elektronikanordnung zum Regeln und/oder Steuern der Hydraulikanordnung (12) auf,
(B) die Elektronikanordnung überprüft die Funktionen der Lenkvorrichtung (3) und kann im Notfall ein Umschalten der Lenkvorrichtung (3) von einem Normalbetrieb auf einen Notbetrieb bewirken,
(C) die Lenkachse (2) ist derart ausgebildet, daß ihre Räder (4) im Notbetrieb selbstspurend sind,
(D) die Hydraulikanordnung (12) weist ein doppeltwirkendes hydrostatisches Stellaggregat (18), ein Regel/Steuerventil (17) sowie ein Freischaltventil (19) auf,
(E) ein der einen Stellrichtung des Stellaggregates (18) zugeordneter erster Hydraulikanschluß (10) des Stellaggregates (18) ist mit einer ersten Hydraulikleitung (11) an einen ersten Anschluß (17a) des Regel/Steuerventils (17) angeschlossen und ein der anderen Stellrichtung des Stellaggregates (18) zugeordneter zweiter Hydraulikanschluß (14) des Stellaggregates (18) ist mit einer zweiten Hydraulikleitung (15) an einen zweiten Anschluß (17b) des Regel/Steuerventils (17) angeschlossen,
(F) ein erster Anschluß (19a) des Freischaltventils (19) ist an die erste Hydraulikleitung (11) angeschlossen und ein zweiter Anschluß (19b) des Freischaltventils (19) ist an die zweite Hydraulikleitung (15) angeschlossen,
(G) in einer dem Normalbetrieb der Lenkvorrichtung (3) zugeordneten ersten Stellung (I) des Freischaltventils (19) sind beide Anschlüsse (19a,b) des Freischaltventils (19) gesperrt,
(H) in einer den Notbetrieb der Lenkvorrichtung (3) zugeordneten zweiten Stellung (II) des Freischaltventils (19) sind beide Anschlüsse (19a,b) des Freischaltventils (19) miteinander verbunden,
**gekennzeichnet durch folgende Merkmale:**
(I) ein erstes Drosselelement (28) ist in der ersten Hydraulikleitung (11) zwischen dem Stellaggregat (18) und der dieser Leitung (11) zugeordneten Anschlußstelle (21) des Freischaltventils (19) angeordnet,
(J) ein zweites Drosselelement (29) ist in der an die erste Hydraulikleitung (11) zwischen dem Regel/Steuerventil (17) und der dieser Leitung (11) zugeordneten Anschlußstelle (21) des Freischaltventils (19) angeordnet,
(K) ein drittes Drosselelement (30) ist in der zweiten Hydraulikleitung (15) zwischen dem Stellaggregat (18) und der dieser Leitung (15) zugeordneten Anschlußstelle (23) des Freischaltventiles (19) angeordnet und
(L) ein viertes Drosselelement (31) ist in der zweiten Hydraulikleitung (15) zwischen dem Regel/Steuerventil (17) und der dieser Leitung (15) zugeordneten Anschlußstelle (23) des Freischaltventiles (19) angeordnet.

2. Lenkvorrichtung nach Anspruch 1,
**dadurch gekennzeichnet,**
**daß** die Hydraulikanordnung (12) als open-center-Anordnung ausgestaltet ist, bei der das Regel/Steuerventil (17) alle seine Anschlüsse miteinander verbindet, wenn keine Regelabweichung zwischen Soll- und Istlenkwinkel vorliegt.

3. Lenkvorrichtung nach Anspruch 1,
**dadurch gekennzeichnet,**
**daß** die Hydraulikanordnung (12) als closed-center-Anordnung ausgebildet ist, bei der das Regel/Steuerventil (17) in einer Stellung (I) einen Anschluß (17c) sperrt, an dem eine Hydraulikdruckquelle (24,25) angeschlossen ist, wenn keine Regelabweichung zwischen soll- und Istlenkwinkel vorliegt.

4. Lenkvorrichtung nach Anspruch 3,
**dadurch gekennzeichnet,**
**daß** die Hydraulikanordnung (12) einen Druckspeicher (24)' aufweist, der von einer Hydraulikpumpe (25) aufgeladen wird.

5. Lenkvorrichtung nach einem der vorhergehenden Ansprüche,
**dadurch gekennzeichnet,**
**daß** das Stellaggregat als Kolben-Zylinder-Aggregat (18) ausgebildet ist.

6. Lenkvorrichtung nach einem der vorhergehenden Ansprüche,
**dadurch gekennzeichnet,**
**daß** bei einem wenigstens dreiachsigen Kraftfahrzeug (1) mit mindestens einer lenkbare Räder (4) aufweisenden Vorderachse (6) und mindestens einer nicht lenkbare Räder (4) aufweisenden Hinterachse (5) die Lenkachse (2) mit den durch die Lenkvorrichtung (3) lenkbaren Rädern (4) als Nachlaufachse oder als Vorlaufachse der Hinterachse (5) oder als weitere gelenkte Vorderachse ausgebildet ist.

## Claims

1. A steering device for steering wheels (4) of a steering axle (2) on a motor vehicle (1) having at least three axles designed as a trailing or tag axle with the following features:
(A) the steering device (3) has a hydraulic arrangement (12) to actuate the steering of the wheels (4) of the steering axle (2) and an electronic arrangement to control the hydraulic arrangement (12),
(B) the electronic arrangement monitors the functions of the steering device (3) and is able to switch the steering device (3) from normal operation to emergency operation in case of emergency,
(C) the steering axle (2) is designed such that its wheels (4) are self-tracking in emergency operation,
(D) the hydraulic arrangement (12) has a dual-action hydrostatic control unit (18), a control valve (17) and a disabling (19) valve,
(E) a first hydraulic connection (10) of the control unit (18) associated with one control direction of the control unit (18) is connected to a first hydraulic line (11) at a first connection (17a) of the control valve (17) and a second hydraulic connection (14) of the control unit (18) associated with another control direction of the control unit (18) is connected to a second hydraulic line (15) at a second connection (17b) of the control valve (17)
(F) a first connection (19a) of the disabling valve (19) is connected to the first hydraulic line (11) and a second connection (19b) of the disabling valve (19) is connected to the second hydraulic line (15),
(G) in a first position (I) of the disabling valve (19) associated with normal operation of the steering device (3), both connections (19a/b) of the disabling valve (19) are blocked,
(H) in a second position (II) of the disabling valve (19) associated with emergency operation of the steering device (3), both connections (19a/b) of the disabling valve (19) are connected together,
**characterised by the following features:**
(I) a first throttle element (28) is positioned in the first hydraulic line (11) between the control unit (18) and the connection point (21) of the disabling valve (19) associated with this line (11),
(J) a second throttle element (29) is positioned in the first hydraulic line (11) between the control valve (17) and the connection point (21) of the disabling valve (19) associated with this line (11),
(K) a third throttle element (30) is positioned in the second hydraulic line (15) between the control unit (18) and the connection point (23) of the disabling valve (19) associated with this line (15),
(L) A fourth throttle element (31) is positioned in the second hydraulic line (15) between the control valve (17) and the connection point (23) of the disabling valve (19) associated with this line (15).

2. A steering device in accordance with claim 1,
**characterised in that**
the hydraulic arrangement (12) is designed as an open centre arrangement in which, if there is no control deviation between the reference and actual steering angles, the control valve (17) connects all its connections together.

3. A steering device in accordance with claim 1,
**characterised in that**
the hydraulic arrangement (12) is designed as a closed centre arrangement in which, if there is no control deviation between the reference and actual steering angles, the control valve (17) blocks a connection (17c) in a position (I) in which a hydraulic pressure source (24, 25) is connected.

4. A steering device in accordance with claim 3,
**characterised in that**
the hydraulic arrangement (12) has an accumulator (24) which is fed by a hydraulic pump (25).

5. A steering device in accordance with one of the preceding claims,
**characterised in that**
the control unit is designed as a piston/cylinder unit (18).

6. A steering device in accordance with one of the preceding claims,
**characterised in that**
in a vehicle (1) having at least three axles with a front axle (6) with at least one front axle (6) with steered wheels (4) and at least one rear axle (5) with non-steered wheels (4), the steering axle (2) with the wheels (4) steered by the steering device (3) is designed as a trailing or tag axle of the rear axle (5) or as a further steered axle.

## Revendications

1. Dispositif de direction pour diriger les roues (4) d'un essieu directeur (2) réalisé sous forme d'essieu antérieur ou d'essieu suivant d'un véhicule automobile (1) comportant au moins trois essieux, comprenant les éléments suivants :
(A) le dispositif de direction (3) comprend un agencement hydraulique (12) pour l'actionnement de direction des roues (4) de l'essieu directeur (2) ainsi qu'un agencement électronique pour réguler et/ou commander l'agencement hydraulique (12),
(B) l'agencement électronique vérifie les fonctions du dispositif de direction (3) et peut provoquer, en cas de secours, une inversion du dispositif de direction (3) pour passer d'un fonctionnement normal vers un fonctionnement de secours,
(C) l'essieu directeur (2) est réalisé de telle sorte que ses roues (4) gardent automatiquement la voie en fonctionnement de secours,
(D) l'agencement hydraulique (12) comprend une unité de positionnement (18) hydrostatique à double effet, une valve de régulation/commande (17) ainsi qu'une valve de libération (19),
(E) un premier raccord hydraulique (10) de l'unité de positionnement (18) associé à l'un des sens de positionnement de l'unité de positionnement (18) est raccordé via une première conduite hydraulique (11) à un premier raccord (17a) de la valve de régulation/commande (17), et un deuxième raccord hydraulique (14) de l'unité de positionnement (18) associé à l'autre sens de positionnement de l'unité de positionnement (18) est raccordé via une deuxième conduite hydraulique (15) à un deuxième raccord (17b) de la valve de régulation/commande (17),
(F) un premier raccord (19a) de la valve de libération (19) est raccordé à la première conduite hydraulique (11) et un deuxième raccord (19b) de la valve de libération (19) est raccordé à la deuxième conduite hydraulique (15),
(G) dans une première position (I), associée au fonctionnement normal du dispositif de direction (3), de la valve de libération (19) les deux raccords (19a, b) de la valve de libération (19) sont bloqués,
(H) dans une deuxième position (II), associée au fonctionnement de secours du dispositif de direction (3), de la valve de libération (19) les deux raccords (19a, b) de la valve de libération (19) sont reliés l'un à l'autre,
**caractérisé en ce que**
(I) un premier élément d'étranglement (28) est agencé dans la première conduite hydraulique (11) entre l'unité de positionnement (18) et l'emplacement de raccordement (21), associé à cette conduite (11), de la valve de libération (19),
(J) un deuxième élément d'étranglement (29) est agencé dans la première conduite hydraulique (11) entre la valve de régulation/commande (17) et l'emplacement de raccordement (21) de la valve de libération (19) associé à cette conduite (11),
(K) un troisième élément d'étranglement (30) est agencé dans la deuxième conduite hydraulique (15) entre l'unité de positionnement (18) et l'emplacement de raccordement (23) de la valve de libération (19) associé à cette conduite (15), et
(L) un quatrième élément d'étranglement (31) est agencé dans la deuxième conduite hydraulique (15) entre la valve de régulation/commande (17) et l'emplacement de raccordement (23) de la valve de libération (19) associé à cette conduite (15).

2. Dispositif de direction selon la revendication 1, **caractérisé en ce que** l'agencement hydraulique (12) est réalisé sous forme d'agencement à "centre ouvert" dans lequel la valve de régulation/commande (17) relie tous ses raccords les uns aux autres lorsqu'il n'y a pas d'écart de régulation entre l'angle de direction de consigne et l'angle de direction réel.

3. Dispositif de direction selon la revendication 1, **caractérisé en ce que** l'agencement hydraulique (12) est réalisé sous forme d'agencement à "centre fermé" dans lequel la valve de régulation/commande (17) obture dans une position (I) un raccord (17c) auquel est raccordée une source de pression hydraulique (24, 25) lorsqu'il n'y a pas d'écart de régulation entre l'angle de direction de consigne et l'angle de direction réel.

4. Dispositif de direction selon la revendication 3, **caractérisé en ce que** l'agencement hydraulique (12) comprend un accumulateur de pression (24) qui est chargé par une pompe hydraulique (25).

5. Dispositif de direction selon l'une des revendications précédentes, **caractérisé en ce que** l'unité de positionnement est réalisée sous forme d'unité à piston-et-cylindre (18).

6. Dispositif de direction selon l'une des revendications précédentes, **caractérisé en ce que** dans un véhicule automobile (1) au moins à trois essieux comportant au moins un essieu avant (6) à roues directrices (4) et au moins un essieu arrière (5) à roues non directrices (4), l'essieu directeur (2) comportant les roues (4) dirigeables par le dispositif de direction (3) est réalisé sous forme d'essieu suivant ou d'essieu antérieur de l'essieu arrière (5) ou sous la forme d'un autre essieu avant directeur.
